# EUROPEAN PATENT SPECIFICATION

(11) **EP 3 068 804 B1**
(45) Date of publication and mention of the grant of the patent: **15.01.2020**
(21) Application number: 14809954.2
(22) Date of filing: 11.11.2014
(51) Int. Cl.: C08B 37/00

(54) **METHOD OF PROCESSING SEAWEED AND RELATED PRODUCTS**
VERFAHREN ZUR VERARBEITUNG VON ALGEN UND ÄHNLICHEN PRODUKTEN
PROCÉDÉ DE TRAITEMENT D'ALGUES ET PRODUITS ASSOCIÉS

(30) Priority: 11.11.2013 GB 201319890
(43) Date of publication of application: 21.09.2016
(73) Proprietor: Marine Biopolymers Ltd., Ayr, Ayrshire KA8 9DJ (GB)
(72) Inventor: MACINNES, Douglas, Ayr Ayrshire KA8 9DJ (GB)
(74) Representative: Lawrie, Donald James
(86) International application number: PCT/GB2014/053344
(87) International publication number: WO 2015/067971

(56) References cited:
- AU-B2- 500 704
- GB-A- 633 798
- GB-A- 191 405 146
- US-A- 4 104 460
- EINAR MOEN ET AL: "Aerobic microbial degradation of alginate in Laminaria hyperborea stipes containing different levels of polyphenols", JOURNAL OF APPLIED PHYCOLOGY, vol. 9, no. 1, 1 January 1997 (1997-01-01) , pages 45-54, XP019247845, KLUWER ACADEMIC PUBLISHERS, DO ISSN: 1573-5176
- GUDMUND SKJAK-BRAEK ET AL: "Alginate as immobilization material. II: Determination of polyphenol contaminants by fluorescence spectroscopy, and evaluation of methods for their removal", BIOTECHNOLOGY AND BIOENGINEERING, vol. 33, no. 1, 5 January 1989 (1989-01-05), pages 90-94, XP055167729, ISSN: 0006-3592, DOI: 10.1002/bit.260330112
- RIOUX ET AL: "Characterization of polysaccharides extracted from brown seaweeds", CARBOHYDRATE POLYMERS, vol. 69, no. 3, 10 May 2007 (2007-05-10), pages 530-537, XP022068674, APPLIED SCIENCE PUBLISHERS, LTD. BARKING, GB ISSN: 0144-8617, DOI: 10.1016/J.CARBPOL.2007.01.009
- D.J. WEDLOCK ET AL: "Effect of formaldehyde pre-treatment on the intrinsic viscosity of alginate from various brown seaweeds", FOOD HYDROCOLLOIDS, vol. 4, no. 1, 1 April 1990 (1990-04-01), pages 41-47, XP055167735, ISSN: 0268-005X, DOI: 10.1016/S0268-005X(09)80326-3
- GOMEZ C G ET AL: "Influence of the extraction-purification conditions on final properties of alginates obtained from brown algae (Macrocystis pyrifera)", INTERNATIONAL JOURNAL OF BIOLOGICAL MACROMOLECULES, vol. 44, no. 4, 1 May 2009 (2009-05-01), pages 365-371, XP026076941, ELSEVIER BV, NL ISSN: 0141-8130, DOI: 10.1016/J.IJBIOMAC.2009.02.005 [retrieved on 2009-02-27]

## Description

### Field of the Invention

This invention relates to a method of processing seaweed, in particular brown seaweed, and related products. In particular, the invention relates to a process for obtaining a target chemical species from seaweed. In one aspect the invention relates to a process for reducing the polyphenol content of seaweed or a target chemical species extracted or derived therefrom. In another aspect the invention relates to a process for reducing the particle size of seaweed or products derived therefrom.

### Background of the Invention

The following description will refer generally to the term "alginate(s)", which is used to refer generally to alginate(s) or salts thereof, alginic acid(s) or salts thereof, and/or alginate derivative(s) or salts thereof, unless a specific species is stated and/or the context dictates otherwise.

Seaweed is a source of commercially useful products such as, for example, alginates. To obtain such commercially useful products, it is invariably necessary to process the seaweed and, often, to extract the commercially useful product. This is the case for alginates.

Alginates are used in many industries such as, for example, the food and drink industries (juice/yoghurt thickener, beer foam stabiliser, low fat spreads, bake stable fruit fillings, ice cream); the pharmaceutical and medical industries (dental impressions, antacid products, wound dressings, drug formulations); the paper and textile industries (reactive dye printing aid, sizing agent, surface finishing aid); and the nutraceutical and health industries (slimming and anti-obesity, pre-biotics and probiotics).

The different uses noted above require alginates that have different (but predictable) chemical and physical properties, such as specific molecular weight range, viscosity and purity, as each of these factors impacts whether an alginate is suitable for a particular use. However, predictably obtaining such chemical and physical properties is difficult to achieve using existing alginate processing techniques.

Therefore, it would be desirable to be able to process seaweed in such a way as to obtain alginates that are predictable in at least some of their chemical and physical properties. In addition, it would be desirable to obtain alginates of consistent purity and that have predictable and pre-selectable chemical and physical properties.

In addition to the above, often it is necessary to use alginates that are colourless, or light in colour, so that the colour of the products to which they are added is not tainted by the colour of the alginates. However, brown seaweeds are dark in colour, the dark colour being provided primarily by polyphenols such as, for example, phenolic acids, tannins, phlorotannins, phloroglucinols, stilbenes, lignans and flavonoids. For example, the brown seaweeds are characterised by the presence of polyphloroglucinols consisting of 1,3,5-trihydroxybenzenoid structural units. Other pigments may also be present such as, for example, pigments provided by xanthophylls (phylloxanthins), or other coloured compounds.

Currently, seaweed is processed as a whole, or using only certain sections such as, for example, the stipe, the lamina or the frond. This means that the compounds that provide colour to the seaweed are incorporated into the processing. For example, when the polyphenols or phenolic materials present in seaweed are incorporated into the alginate extraction process, they form a non-reversible coloured (dark) alginate solution.

Therefore, to obtain alginates that are colourless, or light in colour, it is necessary to chemically treat the seaweed extract (or alginate solution) during processing. Typically, the colouration in the seaweed extract is mitigated or removed using formaldehyde (methanal), which acts as a colour setting or colour fixing agent, by complexing the polyphenols or phenolic material present.

However, for some applications, it is preferred to avoid the use of formaldehyde. This is because under the CLP (Harmonised Classification, Labelling and Packaging) Regulation for substances and mixtures (1272/2008/EC), formaldehyde is classified under Category 2 - "Suspected Human Carcinogen". Therefore, there are at least *potential* environmental and safety issues when using formaldehyde. Therefore, it may be undesirable to have formaldehyde in alginates, and in particular, in alginates that are to be ingested or used in or on the human body.

Therefore, it would be desirable to be able to extract from seaweed substantially colourless or light coloured alginates that are substantially free from polyphenols and formaldehyde. In addition, it would be desirable to obtain alginates from seaweed that are substantially free from polyphenols and formaldehyde or suitable derivatives thereof such as, for example, gluteraldehyde.

Also, as noted above, it is typically found that alginates extracted from seaweed using conventional processing techniques have unpredictable molecular weight ranges, viscosities and purity. Therefore, it would be desirable to be able to process seaweed in such a way as to obtain alginates that are predictable in at least some of their chemical and physical properties. In addition, it would be desirable to obtain alginates of consistent purity and that have predictable and pre-selectable chemical and physical properties. E. Moen et al. (Journal of Applied Phycology 9: 45-54, 1997) disclose aerobic microbial degradation of alginate in *Laminaria hyperborea* stipes containing different levels of polyphenols.

It is an object of the present invention to overcome or mitigate at least some of the problems of the prior art.

### Summary of the Invention

A process for obtaining a target chemical species from seaweed, said process comprising the steps of:
(i) providing a seaweed portion comprising a stipe;
(ii) removing at least a portion of an outwardly facing surface layer of the stipe comprising an epidermis layer and a meristoderm layer;
(iii) dividing the stipe into a plurality of portions by: (i) cutting, followed by (ii) milling; and
(iv) extracting the target chemical species from the plurality of stipe portions.

The outwardly facing surface layer of the stipe may comprise polyphenols. The polyphenols may be selected from one or more the group consisting of: phenolic acids, tannins, phlorotannins, phloroglucinols, stilbenes, lignans and flavonoids.

All of the outwardly facing surface layer of the stipe may be removed. The seaweed portion may comprise substantially only the stipe.

The milled portions may have a particle size having a largest diameter of between approximately 4.5 mm and approximately 250 µm, optionally between approximately 2.36 mm and approximately 250 µm.

The outwardly facing surface layer of the stipe may further comprise a mucilage cuticle and/or optionally a mucus canal.

The seaweed may be selected from one or more of the group consisting of: *laminaria hyperborea, laminaria digitata, lessonia trabeculata, lessonia flavicans,* and *lessonia brasiliensis.*

The outwardly facing surface layer of the stipe that is removed may have a thickness of at least approximately 0.5 mm, optionally at least approximately 1.5 mm.

The step of removing the outwardly facing surface layer of the stipe may comprise the step of peeling or abrading using a peeling and/or an abrading machine for peeling and/or abrading vegetables or the like.

The peeling and/or abrading machine may be automated.

The process may comprise the further step of washing the plurality of stipe portions with water, optionally at a temperature of between approximately 25 °C and approximately 90 °C, optionally between approximately 40 °C and approximately 90 °C, optionally between approximately 70 °C and approximately 85 °C.

The plurality of stipe portions may be washed for between approximately 10 minutes and 60 minutes, optionally between approximately 15 minutes and approximately 45 minutes, optionally between approximately 20 minutes and approximately 30 minutes.

The process may comprise the further step of removing, substantially reducing the amount of, or masking the colour of remaining polyphenols.

The polyphenols may be selected from one or more the group consisting of: phenolic acids, tannins, phlorotannins, phloroglucinols, stilbenes, lignans and flavonoids.

The step of removing, substantially reducing the amount of, or masking the colour of remaining polyphenols may comprise providing a compound which is reactive with the polyphenols.

The step of removing, substantially reducing the amount of, or masking the colour of remaining polyphenols may be carried out at a temperature of between approximately 50 °C and 80 °C.

The polyphenol content of the target chemical species may be less than 2 % by weight, optionally less than 1 % by weight.

According to a second aspect of the invention there is provided alginate, alginic acid or an alginate derivate, or a salt thereof, obtainable, obtained or directly obtained by the process of the first aspect.

### Brief Description of the Drawings

Embodiments of the invention will now be described, by way of example only, with reference to the drawings, in which:

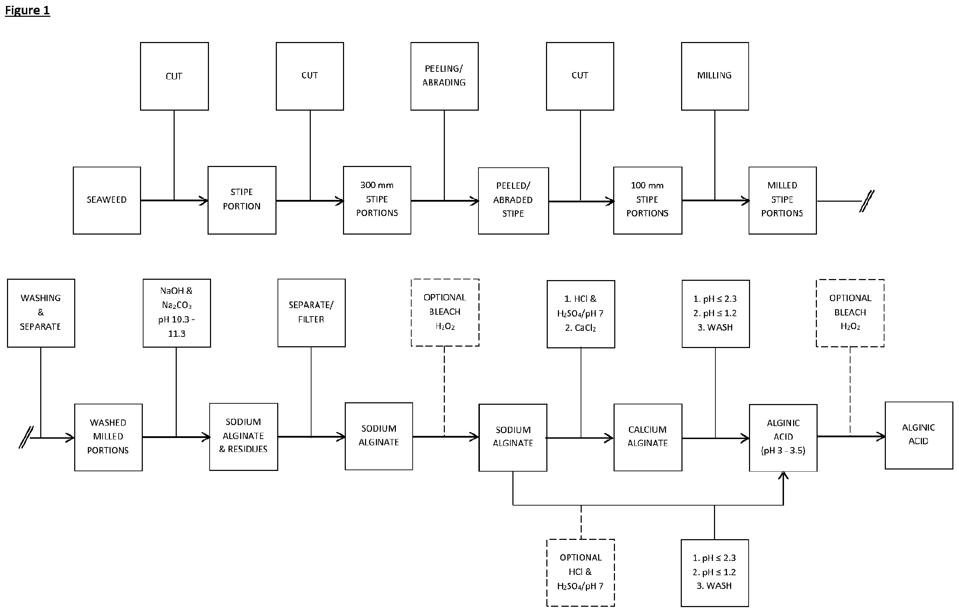

Figure 1 is a flow diagram which illustrates a process in accordance with one embodiment of the invention.

### Detailed Description

Referring to Figure 1, in one embodiment, the process involves obtaining seaweed (*laminaria hyperborea*) having a stipe and removing the non-stipe parts of the seaweed to provide a seaweed portion comprising substantially stipe only. The non-stipe parts are removed by manual or automated cutting, or some other known method. The seaweed portion is then cut into smaller portions of approximately 300mm in length either manually (i.e., by hand) or using an automatic vegetable cutting machine, as is commonly known in the vegetable cutting industry.

The stipe of the seaweed portions is then peeled to remove the outer surface (which is sometimes referred to as the peel, skin or bark), using an automated vegetable peeling machine as is known in the art and as supplied by Sormac™ The thickness of the outer surface that is removed is approximately 1.5 mm, and is typically as low as 0.5 mm, but may be slightly thicker or thinner depending on the type, age and thickness of the seaweed being used. In particular, the thickness that is removed is typically between approximately 0.5 mm and approximately 2.5 mm, and most typically between approximately 0.5 mm and approximately 1.5 mm.

In a first example, a 300 mm long stipe weighing 296 grams had 99.5 grams of peel removed, leaving a peeled portion weighing 196.5 grams. Therefore, 9.2 % by weight of the stipe was removed.

In a second example, a 300 mm long stipe weighing 122 grams had 14.8 grams of peel removed, leaving a peeled portion weighing 107.2 grams. Therefore, 12.4 % by weight of the stipe was removed.

Further examples are given in Tables 1 and 2 below.

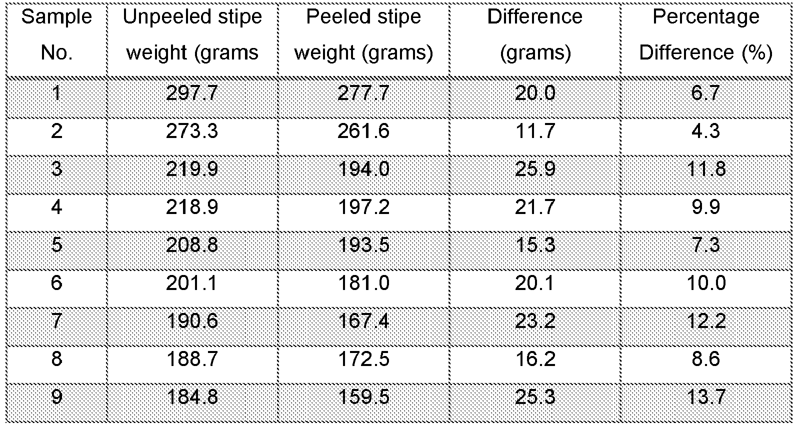

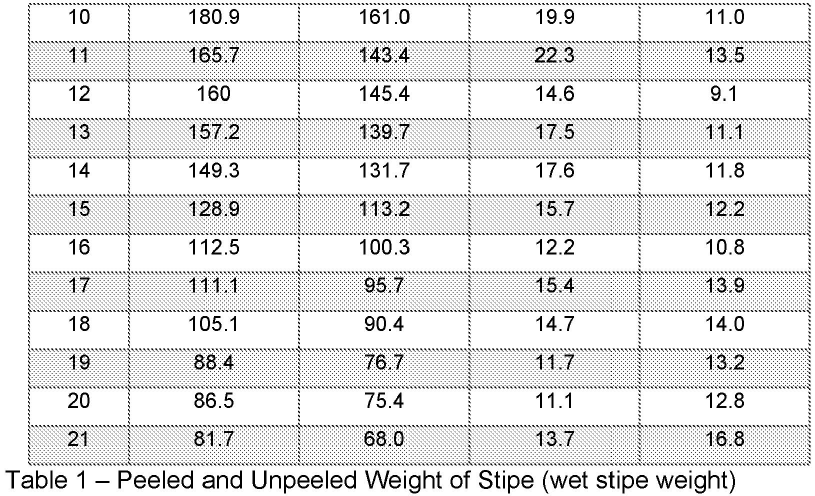

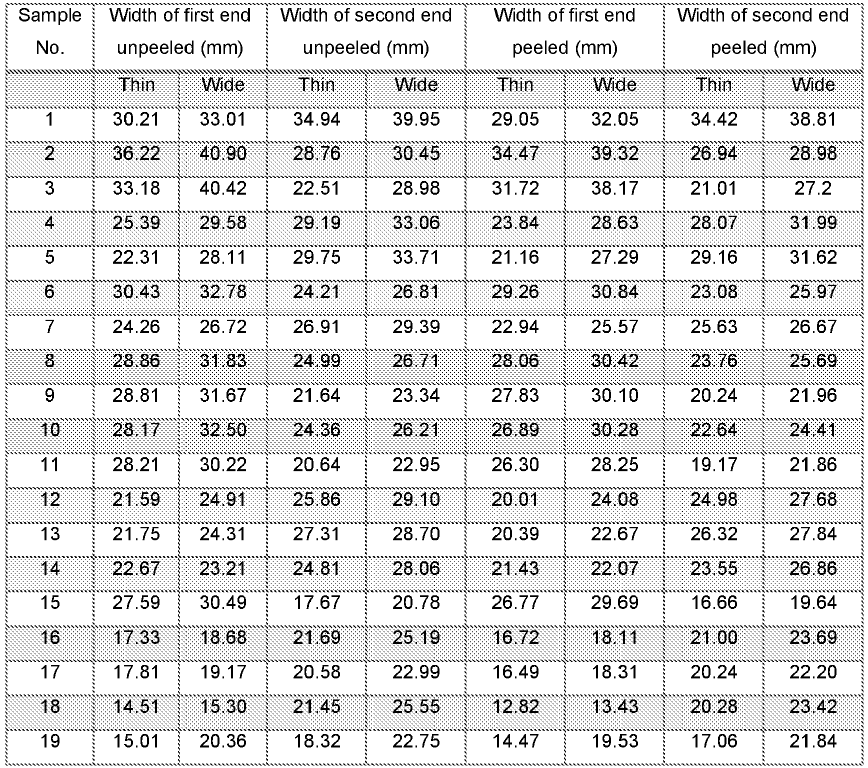

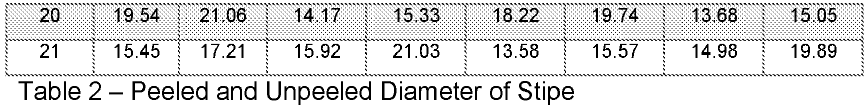

The "thin" and "wide" widths or diameters relate to the width or diameter of the cross-section of the stipe portion. Both a "thin" and a "wide" width or diameter are quoted as the cross-section is not necessarily round, and thus has a thinnest and a widest width or diameter.

The examples given are based on the portions of a 300 mm length of *Laminaria hyperborea* stipe. These stipe portions have different diameters depending on the age of the seaweed, and generally speaking have a thicker and a thinner end.

Therefore, the amount of the outer surface that is removed is from approximately 4 % by weight to approximately 17 % by weight of the total stipe weight.

The vegetable peeling machine is configured to remove substantially all of the outwardly facing surface of the stipe. This peeled section (i.e., the outwardly facing surface) includes the epidermis layer and in one embodiment may also include the meristoderm layer, epiphytes, a mucilage cuticle and/or a mucus canal.

Other suitable peeling or vegetable peeling machines can be used. Generally, the peeling machines work using a series of blades which act on the entire circumference of the stipe by the angle they are set at within the peeler. In the example given above, the blade angle is set at 12° to 23° from the horizontal axis. Other angles can also be used depending on the angle at which the stipe is present to the blade relative to the horizontal plane. The outer surface is removed as a continuous peel the entire length of the stipe to a depth of 1.5 mm on a typical stipe cut to lengths of 300 mm. However the amount of outer surface removed is based on the age and type of seaweed being used, and is typically a ratio of the circumference to depth of cut. Experiments with *laminaria hyperborea* have shown that the amount of outer surface removed is between approximately 4 % to approximately 17 % of the total weight of the wet stipe. The smaller percentage is achieved with seaweed that is less than 5 years old, and the larger percentage is achieved with seaweed that is between 3 and 5 years old.

In an alternative embodiment, the peel is removed by abrasion or scraping.

Referring again to Figure 1, in one embodiment, the process involves obtaining seaweed (*laminaria hyperborea*) having a stipe and removing the non-stipe parts of the seaweed to provide a seaweed portion comprising substantially stipe only. The non-stipe parts are removed by manual or automated cutting, or some other known method. The seaweed portion is then cut into smaller portions of approximately 300mm in length either manually (i.e., by hand) or using an automatic vegetable cutting machine, as is commonly known in the vegetable cutting industry.

The stipe of the seaweed portions is then abraded or scraped to remove the outer surface (which is sometimes referred to as the peel, skin or bark), using a rotating brush. Alternatively, the abrasion can be done by hand using a scourer or similar abrasive material. The thickness of the outer surface that is removed is typically between 0.5 mm and 1.5 mm, but may be slightly thicker or thinner depending on the type, age and thickness of the seaweed being used.

This outer surface of the stipe is the outwardly facing surface (or layer) of the stipe, and generally comprises polyphenols, which give the seaweed its distinctive brown or green colouration. Typical polyphenols found in seaweed are phenolic acids, tannins, phlorotannins, phloroglucinols, stilbenes, lignans and flavonoids.

The % weight of polyphenols remaining in the stipe after removal of the outwardly facing surface (also referred to as "debarking") is estimated at less than 2 % by weight of the dry stipe, and can be less than 1 % by weight of the dry stipe, and is typically less than or equal to 0.5 % by weight of the dry stipe, or less than or equal to 0.3 % by weight of the dry stipe.

After peeling, the stipe is divided by cutting into several portions of approximately 100 mm each in length and using a vegetable cutting machine supplied by Sormac™ The cut stipe portions are then further divided to a chip type product by milling using a pre-breaker milling machine as is known in the art as supplied by Urschel™. For example, the Urschel™ 3500 series can be used with a prebreaker head, and followed by a second pass with finer teeth. The chip type product is then further milled using a finer screen to provide a smaller particle size and using a milling machine as is known in the art.

The milled stipe provides a plurality of stipe portions having a particle size distribution as described in Table 3 or in Table 4.

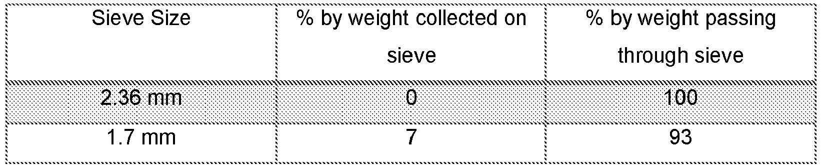

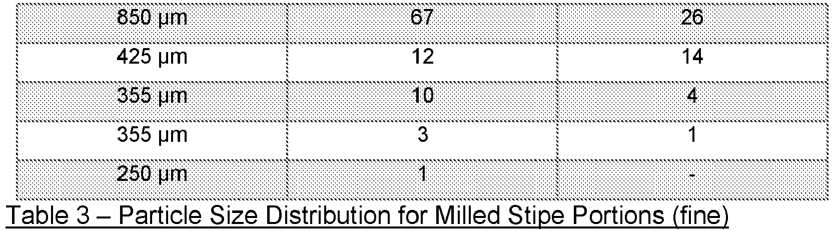

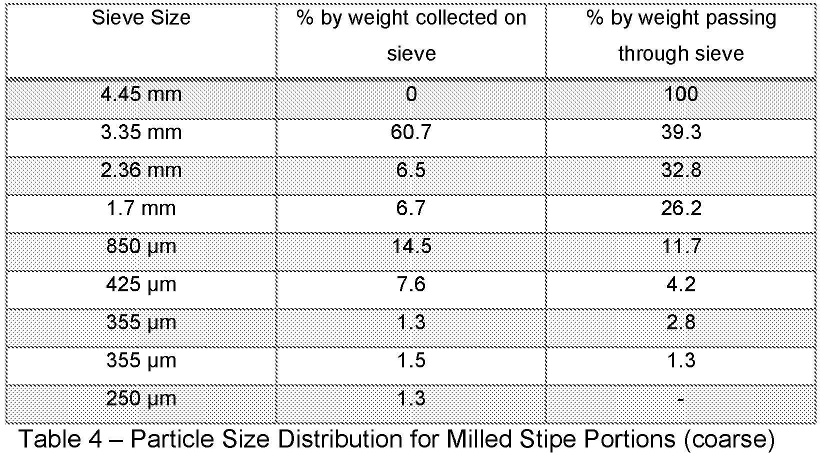

A target chemical species is then extracted from the stipe portions, as will be further described below. In this case, the target chemical species is alginate.

The milled stipe portions having a solids content of approximately 11 % by weight to approximately 14 % by weight is washed in hot water at 70 °C for approximately 15 minutes to approximately 45 minutes. To achieve this target temperature, water is heated to 85 °C and mixed with the milled wet stipe portions. The washing is a three stage process as is further described below. Firstly, from 2 to 4 litres of heated water per kg of milled wet stipe portions is added to the milled wet stipe portions and then agitated, and the washed wet stipe portions are then allowed to drain through a 250 µm filter, and the supernatant is collected for fine chemical extraction. Secondly, the milled wet stipe portions are then collected and immersed in a further dose of water at 70 °C, using between 2 and 4 litres of water per kg of milled wet stipe portions, and the washed wet stipe portions are then allowed to drain through a 250 µm filter for approximately 15 minutes. This second step is then repeated to give the third step in the three step washing process. In the washing process the water temperature is generally kept between 70 °C and 85 °C. However, it will be appreciated that other suitable temperatures can be used such as, for example, 25 °C to 90 °C, or 40 °C to 90 °C. More or fewer washing steps can be used as is required for any particular process. For example, the washing may be a continuous process. Also, it will also be appreciated that depending on the temperature and the number of washing stages, the time used for each stage can vary, and is typically from about 10 minutes to about 60 minutes.

On completion of the washing process, the solids content of the milled wet stipe portions is approximately 7 % by weight (i.e., around half of the solids content of the milled wet stipe portions at the start of the washing process).

If necessary, a colour fixing step can be carried out at this stage. This colour fixing step is used if, despite the peeling step described above, the polyphenol level remains too high for the desired target chemical species. The colour fixing step involves reacting any remaining polyphenols with a compound which is reactive with the polyphenols and removing the so-formed species from the mixture. This removes, or substantially reduces, the amount of any remaining polyphenols in the stipe portions.

In one embodiment, the colour fixing step involves treating the washed milled wet stipe portions with a 1.8% solution of formaldehyde at a temperature of from approximately 50 °C to approximately 80 °C.

As most of the polyphenols have been removed in the peeling step, advantageously this colour fixing step (if necessary or desirable) can be carried out without the use of formaldehyde.

Alternatively, formaldehyde can be used to remove any remaining polyphenols. As the vast majority of the polyphenols have been removed by peeling, the amount of formaldehyde used is significantly less than is used in known colour fixing processes. Clearly, this is advantageous. Nevertheless, it is preferable to avoid the use of formaldehyde to prevent any formaldehyde being present in the target chemical species. An alternative to formaldehyde is gluteraldehyde and/or a suitable aldehyde.

The milled washed material is then transferred into a suitable reaction vessel and made up to the appropriate level with water (approximately 3 parts water to 1 part milled washed material) to maintain a reaction temperature of 70 °C +/- 2.5 °C. The temperature is maintained by an external water jacket heated to the appropriate temperature. Anhydrous sodium carbonate is then added to the mixture based on 27 g of sodium carbonate per kg of milled wet stipe portions, followed by the addition of 25.3 ml of 10 % weight by volume sodium hydroxide solution per kg of milled wet stipe portions. In this step, the pH is adjusted to between pH 10.3 and pH 11.3, although a range of pH 10 to pH 12 can be used. This provides a solution containing solubilised alginate, and residual solids. Alternatively, sodium hydroxide only can be used, without the addition of sodium carbonate. Also, sodium bicarbonate or another suitable alkali can be used.

The above step is an alkali extraction process. The methodology uses an excess of sodium ions to "salt-out" or solubilise the alginate which exists in the stipe portions in an insoluble form, typically calcium alginate. The reaction temperature and reaction time can be varied, and the same or a similar reaction can occur but with different reaction kinetics. For example, the reaction temperature can be from about 55 °C to about 85 °C.

After the initial alkali extraction, the so-formed solution and residual solids are separated and/or filtered. The solution may then optionally be bleached using hydrogen peroxide, or another bleaching agent.

The process may then follow one of two separate routes (Direct Acid Route or Alginate Salt Route), both of which are outlined below.

### Route 1 (Direct Acid Route)

As an optional first step of the direct acid route, the pH of the separated and/or filtered solution is first adjusted to pH 7 by the addition of hydrochloric acid and/or sulphuric acid (or an alternative acid, such as hydrochloric acid).

The pH of the solution is then reduced to less than 2.3 using sulphuric acid, or an alternative acid, such as hydrochloric acid. The pH is then further reduced to less than 1.2 using sulphuric acid, or an alternative acid, such as hydrochloric acid. The so formed alginic acid precipitate is then washed with water to remove residual free (inorganic) acid and to increase the pH to provide a solution having a pH of around pH 3 to around pH 3.5.

If desirable, the alginic acid can then be converted to sodium alginate or potassium alginate by adjusting the pH of the solution to approximately pH 5.5 to pH 8.5 (typically pH 6.5 to pH 7.5) using a base having sodium ions or potassium ions thereby causing an alginate salt to form, optionally as a precipitate. Other salts can be prepared as is known in the art and using suitable counter ions.

### Route 2 (Alginate Salt Route)

The pH of the separated and/or filtered solution is first adjusted to pH 7 by the addition of hydrochloric acid and/or sulphuric acid. Calcium chloride is then added using a 3 % weight by volume calcium chloride solution. This causes a calcium alginate precipitate to form.

The pH of the solution is then reduced to less than 2.3 using sulphuric acid, or an alternative acid, such as hydrochloric acid. The pH is then further reduced to less than 1.2 using sulphuric acid, or an alternative acid, such as hydrochloric acid. The so formed alginic acid precipitate is then washed with water to remove residual free (inorganic) acid and to increase the pH to provide a solution having a pH of around pH 3 to around pH 3.5.

If desirable, the alginic acid can then be converted to sodium alginate or potassium alginate by adjusting the pH of the solution to approximately pH 5.5 to pH 8.5 (typically pH 6.5 to pH 7.5) using a base having sodium ions or potassium ions thereby causing an alginate salt to form, optionally as a precipitate. Other salts can be prepared as is known in the art and using suitable counter ions.

The alginate formed by the above process (either route 1 or route 2) has a polyphenol content of less than 1 % by weight. In one example, the polyphenol content is less than or equal to 0.5 % by weight, and in another example, the polyphenol content is less than or equal to or less than or equal to 0.3 % by weight. In a further example, the polyphenol content is less than or equal to 2 % by weight.

After the formation of alginic acid, the alginic acid may optionally be bleached using hydrogen peroxide, or another bleaching agent. This is ordinarily carried out if the alginic acid remains coloured, and if it is desirable to further reduce the colouration of the alginic acid.

Whilst the above process has been described in the context of obtaining alginate, it will be appreciated that other target chemical species could be obtained. Also, whilst the above process has been described in relation to *laminaria hyperborea*, other seaweeds (macroalgae) may be used such as, for example, *laminaria digitata, lessonia trabeculata, lessonia flavicans,* and *lessonia brasiliensis.* Other brown seaweeds such as *ascophyllum nodosum* or *macrocystis pyrifera* can be used.

In one embodiment there is provided a target chemical species, optionally alginate, prepared by the process outlined herein.

The target chemical species obtained from the processes described can be used in applications that require low levels of polyphenols, for example, where the target chemical species is alginate.

In a further embodiment there is provided a process for reducing the polyphenol content of seaweed using the process as described above, and in a related embodiment there is provided a target chemical species, optionally alginate, prepared by that process.

In a further embodiment there is provided a process for reducing the particle size of seaweed and/or products derived therefrom using the process as described above, and in a related embodiment there is provided a target chemical species, optionally alginate, prepared by that process.

In addition to the above, often it is necessary to use alginates that are colourless, or light in colour, so that the colour of the products to which they are added is not tainted by the colour of the alginates. However, most seaweed is dark in colour, the dark colour being provided primarily by polyphenols. In known processes, such polyphenols can be removed or fixed using formaldehyde.

However, as previously noted, for some applications, it is preferred to avoid the use of formaldehyde. This is because under the CLP (Harmonised Classification, Labelling and Packaging) Regulation for substances and mixtures (1272/2008/EC), formaldehyde is classified under Category 2 - "Suspected Human Carcinogen". Therefore, there are at least *potential* environmental and safety issues when using formaldehyde. Therefore, it may be undesirable to have formaldehyde in alginates, and in particular, in alginates that are to be ingested or used in or on the human body.

The process of the present invention eliminates, or at least mitigates, the use of formaldehyde, which historically has been used as a colour setting and/or a bacteriostatic agent in the extraction and production of alginate. Thus, by avoiding the use of formaldehyde, the process of the present invention provides a significant advantage over existing processes.

Furthermore, the process of the present invention enables alginate to be produced having predictable chemical and physical properties, such as specific molecular weight range, viscosity and purity. This is important as each of these factors impacts whether an alginate is suitable for a particular use. Without wishing to be bound by theory, it is thought that a combination of low polyphenol content and relatively small and consistent particle size distribution enables the production of alginate having predictable chemical and physical properties, such as specific molecular weight range, viscosity and purity.

Thus, the present invention provides alginates that have predictable and pre-selectable chemical and physical properties.

## Claims

1. A process for obtaining a target chemical species from seaweed, said process comprising the steps of:
(i) providing a seaweed portion comprising a stipe;
(ii) removing at least a portion of an outwardly facing surface layer of the stipe comprising an epidermis layer and a meristoderm layer;
(iii) dividing the stipe into a plurality of portions by: (i) cutting, followed by (ii) milling; and
(iv) extracting the target chemical species from the plurality of stipe portions.

2. A process as claimed in claim 1, wherein the outwardly facing surface layer of the stipe comprises polyphenols.

3. A process as claimed in any preceding claim, wherein all of the outwardly facing surface layer of the stipe is removed.

4. A process as claimed in any preceding claim, wherein the seaweed portion comprises substantially only the stipe.

5. A process as claimed in any preceding claim, wherein the outwardly facing surface layer of the stipe comprises epiphytes, and/or a mucilage cuticle and/or a mucus canal.

6. A process as claimed in any preceding claim, wherein the milled portions have a particle size having a largest diameter of between approximately 4.5 mm and approximately 250 µm, optionally between approximately 2.36 mm and approximately 250 µm.

7. A process as claimed in any preceding claim, wherein the seaweed is selected from one or more of the group consisting of: *laminaria hyperborea, laminaria digitata, lessonia trabeculata, lessonia flavicans,* and *lessonia brasiliensis.*

8. A process as claimed in any preceding claim, wherein the outwardly facing surface layer of the stipe that is removed has a thickness of between approximately 0.5 mm and approximately 2.5 mm, optionally between approximately 0.5 mm and approximately 1.5 mm.

9. A process as claimed in any preceding claim, wherein the step of removing the outwardly facing surface layer of the stipe comprises the step of peeling or abrading using a peeling and/or an abrading machine for peeling and/or abrading vegetables, optionally wherein said peeling and/or abrading machine is automated.

10. A process as claimed in any preceding claim, comprising the further step of washing the plurality of stipe portions with water, optionally at a temperature of between approximately 25 °C and approximately 90 °C, optionally between approximately 40 °C and approximately 90 °C, optionally between approximately 70 °C and approximately 85 °C.

11. A process as claimed in claim 10, wherein the plurality of stipe portions are washed between approximately 10 minutes and 60 minutes, optionally between approximately 15 minutes and approximately 45 minutes, optionally between approximately 20 minutes and approximately 30 minutes.

12. A process as claimed in any preceding claim, comprising the further step of removing, reducing the amount of, or masking the colour of remaining polyphenols, optionally by providing a compound which is reactive with the polyphenols.

13. A process as claimed in claim 12, wherein the step of removing, reducing the amount of, or masking the colour of remaining polyphenols is carried out at a temperature of between approximately 50 °C and 80 °C.

14. A process as described in any preceding claim, wherein the polyphenol content of the target chemical species is less than 2 % by weight, optionally less than 1 % by weight.

15. Alginate, alginic acid or an alginate derivate, or a salt thereof, obtainable, obtained or directly obtained by the process of any one of claims 1 to 14.

## Patentansprüche

1. Verfahren zum Erhalten einer chemischen Zielspezies aus Meeresalgen, wobei das Verfahren die folgenden Schritte umfasst:
(i) Bereitstellen eines Meeresalgenteils, der einen Stängel umfasst;
(ii) Entfernen wenigstens eines Teils einer nach außen gerichteten Oberflächenschicht des Stängels, die eine Epidermisschicht und eine Meristodermschicht umfasst;
(iii) Teilen des Stängels in mehrere Teile durch: (i) Schneiden, gefolgt von (ii) Mahlen; und
(iv) Extrahieren der chemischen Zielspezies aus mehreren Stängelteilen.

2. Verfahren nach Anspruch 1, wobei die nach außen gerichtete Oberflächenschicht des Stängels Polyphenole umfasst.

3. Verfahren nach einem der vorhergehenden Ansprüche, wobei die gesamte nach außen gerichtete Oberflächenschicht des Stängels entfernt wird.

4. Verfahren nach einem der vorhergehenden Ansprüche, wobei der Meeresalgenteil im Wesentlichen nur den Stängel umfasst.

5. Verfahren nach einem der vorhergehenden Ansprüche, wobei die nach außen gerichtete Oberflächenschicht des Stängels Aufsitzerpflanzen bzw. eine Schleimkutikula bzw. einen Schleimkanal umfasst.

6. Verfahren nach einem der vorhergehenden Ansprüche, wobei die gemahlenen Teile eine Partikelgröße mit einem größten Durchmesser zwischen ca. 4,5 mm und ca. 250 µm, optional zwischen ca. 2,36 mm und ca. 250 µm haben.

7. Verfahren nach einem der vorhergehenden Ansprüche, wobei das Meeresalgen aus einer oder mehreren Gruppen ausgewählt ist, bestehend aus: Laminaria hyperborea, Laminaria digitata, Lessonia trabeculata, Lessonia flavicans und Lessonia brasiliensis.

8. Verfahren nach einem der vorhergehenden Ansprüche, wobei die nach außen gerichtete Oberflächenschicht des zu entfernenden Stängels eine Dicke zwischen ca. 0,5 mm und ca. 2,5 mm, optional zwischen ca. 0,5 mm und ca. 1,5 mm aufweist.

9. Verfahren nach einem der vorhergehenden Ansprüche, wobei der Schritt des Entfernens der nach außen gerichteten Oberflächenschicht des Stängels den Schritt des Schälens oder Abreibens unter Verwendung einer Schäl- bzw. Abreibemaschine zum Schälen bzw. Abreiben von Gemüse umfasst, optional wobei die Schäl- bzw. Abreibemaschine automatisiert ist.

10. Verfahren nach einem der vorhergehenden Ansprüche, umfassend den weiteren Schritt des Waschens mehrerer Stängelteile mit Wasser optional bei einer Temperatur zwischen ca. 25 °C und ca. 90 °C, optional zwischen ca. 40 °C und ca. 90 °C, optional zwischen ca. 70 °C und ca. 85 °C.

11. Verfahren nach Anspruch 10, wobei die mehreren Stängelteile zwischen ca. 10 min und 60 min, optional zwischen ca. 15 min und ca. 45 min, optional zwischen ca. 20 min und ca. 30 min gewaschen werden.

12. Verfahren nach einem der vorhergehenden Ansprüche, umfassend den weiteren Schritt des Entfernens oder des Verringerns der Menge oder des Abdeckens der Farbe der Farbe derselben maskiert wird, optional durch Bereitstellen einer Verbindung, die mit den Polyphenolen reagiert.

13. Verfahren nach Anspruch 12, wobei der Schritt des Entfernens, des Verringerns der Menge oder Abdeckens der Farbe der verbleibenden Polyphenole bei einer Temperatur zwischen ca. 50 °C und 80 °C durchgeführt wird.

14. Verfahren wie in einem der vorhergehenden Ansprüche beschrieben, wobei der Polyphenolgehalt der chemischen Zielspezies unter 2 Gew.-%, optional unter 1 Gew.-% liegt.

15. Alginat, Alginsäure oder ein Alginatderivat oder ein Salz davon, die durch das Verfahren nach einem der Ansprüche 1 bis 14 erhalten werden können, erhalten werden bzw. direkt erhalten werden.

## Revendications

1. Procédé d'obtention d'une espèce chimique cible à partir d'algues, ledit procédé comprenant les étapes consistant à :
(i) fournir une portion d'algues comprenant un stipe ;
(ii) retirer au moins une portion d'une couche superficielle du stipe dirigée vers l'extérieur comprenant un épiderme et un méristoderme ;
(iii) diviser le stipe en une pluralité de portions par : (i) une coupe, suivie d'un (ii) broyage ; et
(iv) extraire l'espèce chimique cible de la pluralité de portions de stipe.

2. Procédé selon la revendication 1, dans lequel la couche superficielle du stipe dirigée vers l'extérieur comprend des polyphénols.

3. Procédé selon l'une quelconque des revendications précédentes, dans lequel la totalité de la couche superficielle du stipe dirigée vers l'extérieur est retirée.

4. Procédé selon l'une quelconque des revendications précédentes, dans lequel la portion d'algues ne comprend essentiellement que le stipe.

5. Procédé selon l'une quelconque des revendications précédentes, dans lequel la couche superficielle du stipe dirigée vers l'extérieur comprend des épiphytes et/ou une cuticule mucilagineuse et/ou un canal muqueux.

6. Procédé selon l'une quelconque des revendications précédentes, dans lequel les portions broyées ont une taille de particules présentant un diamètre maximal compris entre environ 4,5 mm et environ 250 pm, facultativement entre environ 2,36 mm et environ 250 pm.

7. Procédé selon l'une quelconque des revendications précédentes, dans lequel les algues sont sélectionnées parmi une ou plusieurs du groupe constitué de : *Laminaria hyperborea, Laminaria digitata, Lessonia trabeculata, Lessonia flavicans* et *Lessonia brasiliensis.*

8. Procédé selon l'une quelconque des revendications précédentes, dans lequel la couche superficielle du stipe dirigée vers l'extérieur qui est retirée a une épaisseur comprise entre environ 0,5 mm et environ 2,5 mm, facultativement entre environ 0,5 mm et environ 1,5 mm.

9. Procédé selon l'une quelconque des revendications précédentes, dans lequel l'étape de retrait de la couche superficielle du stipe dirigée vers l'extérieur comprend l'étape d'épluchage ou d'abrasion à l'aide d'une machine d'épluchage et/ou d'abrasion destinée à éplucher et/ou abraser des légumes, facultativement dans lequel ladite machine d'épluchage et/ou d'abrasion est automatisée.

10. Procédé selon l'une quelconque des revendications précédentes, comprenant l'étape supplémentaire de lavage de la pluralité de portions de stipe à l'eau, facultativement à une température comprise entre environ 25 °C et environ 90 °C, facultativement entre environ 40 °C et environ 90 °C, facultativement entre environ 70 °C et environ 85 °C.

11. Procédé selon la revendication 10, dans lequel la pluralité de portions de stipe sont lavées entre environ 10 minutes et 60 minutes, facultativement entre environ 15 minutes et environ 45 minutes, facultativement entre environ 20 minutes et environ 30 minutes.

12. Procédé selon l'une quelconque des revendications précédentes, comprenant l'étape supplémentaire de retrait des polyphénols restants, de réduction de leur quantité ou de masquage de leur couleur, facultativement en fournissant un composé qui réagit avec les polyphénols.

13. Procédé selon la revendication 12, dans lequel l'étape de retrait des polyphénols restants, de réduction de leur quantité ou de masquage de leur couleur est réalisée à une température comprise entre environ 50 °C et 80 °C.

14. Procédé selon l'une quelconque des revendications précédentes, dans lequel la teneur en polyphénols de l'espèce chimique cible est inférieure à 2 % en poids, facultativement inférieure à 1 % en poids.

15. Alginate, acide alginique ou dérivé d'alginate, ou sel de ces derniers, pouvant être obtenu, étant obtenu ou étant directement obtenu par le procédé selon l'une quelconque des revendications 1 à 14.
